# EUROPEAN PATENT SPECIFICATION

(11) **EP 1 560 988 B1**
(45) Date of publication and mention of the grant of the patent: **27.12.2006**
(21) Application number: 03759065.0
(22) Date of filing: 06.10.2003
(51) Int. Cl.: E03B 3/03, E03B 11/10, E04H 4/10

(54) **SHADOW CLOTH TO SPAN A BASIN**
BESCHATTUNG EINES WASSERBECKENS MITTELS EINES TUCHES
TOILE DE COUVERTURE SOLAIRE POUR RECOUVRIR UN BASSIN

(30) Priority: 13.11.2002 NL 1021912
(43) Date of publication of application: 10.08.2005
(73) Proprietor: TenCate Geosynthetics Netherlands bv, 7602 HR Almelo (NL)
(72) Inventor: WOERTMAN, Theodorus, Aloysius, NL-7442 ZS Nijverdal (NL); DORTLAND, Gerhard-Jan, NL-7571 CS Oldenzaal (NL)
(74) Representative: 't Jong, Bastiaan Jacob
(86) International application number: PCT/NL2003/000680
(87) International publication number: WO 2004/044338

(56) References cited:
- NL-C- 1 001 298
- US-A- 4 735 524
- US-A1- 2002 131 822

## Description

The invention relates to a shadow cloth for spanning a water basin. Such a shadow cloth is known from document NL-C- 1001298. In warm countries where little rain falls the supply of irrigation water and drinking water is an important matter. When rain does fall, it is caught and collected in water basins so that this water can be used at a later time. Water pumped up from the ground and water transported from elsewhere are likewise also stored in water basins. The problem in warm countries, however, is that the water in these water basins evaporates very quickly as a result of the high temperatures and radiation from the sun.

In order to prevent this evaporation it is known to hang a shadow cloth over such a water basin. However, this cloth may not have too high a density, since falling rain cannot then enter the water basin because the shadow cloth closes off this water basin. Conversely, the density may not be too low since too much solar radiation then passes through the cloth and too much evaporation still takes place.

It is known to arrange two layers of cloth one above the other over the water basin. Owing to the low density of the cloth rainwater can pass through the cloth relatively easily. The solar radiation is filtered twice by the two layers, thereby achieving a relatively high sun protection. A drawback of such a construction however is that the sun protection cannot be readily controlled, since the position of the two cloths above each other is not fixed, whereby there is the possibility of the cloths lying one above the other precisely such that a high level of solar radiation can still pass through the cloth.

Another problem of shadow cloths is the suspending thereof. Wires normally extend over the water basin, on which wires the shadow cloth is placed. The cloth is then fastened to the wires so that it can no longer be blown away. It is also known, once the cloth has been laid on the wires, to extend a second set of wires over the cloth so that the cloth is also fixed above the water basin. Fastening the cloth to the extended wires is labour-intensive and spanning a second set of wires entails higher costs.

It is an object of the invention to provide a shadow cloth which can be arranged at relatively low cost over the water basin and which combines a good water-permeability with a good sun protection.

The object of the invention is achieved with a cloth comprising a first layer with water-permeable zones and sun protection zones and a second layer with water-permeable zones and sun protection zones, wherein the sun protection zones of the first layer are positioned at the location of the water-permeable zones of the second layer and the water-permeable zones of the first layer are positioned at the location of the sun protection zones of the second layer.

Such a shadow cloth thus ensures that sun protection zones are present over the whole surface of the cloth which are positioned either in the first or the second layer. It is hereby possible to achieve an optimal sun protection of the cloth. In addition, water-permeable zones are present in the upper first layer which can collect falling rainwater. This water can pass through this water-permeable zone in the first layer where it then drops onto a sun protection zone of the second layer. The water can subsequently flow over this sun protection zone to a water-permeable zone in the second layer, so that the rainwater can then still run into the water basin.

In a preferred embodiment the sun protection zones of the first layer overlap the water-permeable zones of the second layer. This enhances the sun protection properties of the cloth.

The cloth according to the invention is preferably a woven fabric of weft and warp threads. Threads are here also understood to mean band-shaped or ribbon-shaped threads. The warp threads for at least one of the layers can herein comprise first main threads arranged at a substantially fixed distance from each other and second subsidiary threads arranged in zones between the main threads. The first main threads provide a framework, and the sun protection zones are provided in the woven fabric by means of the second subsidiary threads arranged in zoned manner. A cloth can thus be obtained with zones of a very open structure and zones of a very dense structure.

In a preferred embodiment the subsidiary threads have a substantially elongate cross-section. These threads can thus be ribbon-like and manufactured from for instance a plastic foil, such as polyethylene and polypropylene. An optimal sun protection is thus obtained for these zones.

In another preferred embodiment each layer has at the position of the sun protection zones a higher density than at the position of the water-permeable zones.

In another preferred embodiment the first layer and second layer are connected to each other at discrete positions. The two layers thus form a whole and the shadow cloth is easy to handle, while on the other hand sufficient space is available between the two layers for transport therebetween of the falling rainwater.

The first layer and second layer are preferably connected to each other along strips running parallel to each other such that channels are formed between the first and second layer. Such a construction can be readily obtained with for instance a woven fabric. The tensioning wires, filaments or tensioning cables which extend over a water basin can moreover run through the channels. Because the cables run through these channels it is no longer necessary to secure the shadow cloth to the cables. Nor is a second set of cables any longer necessary, since the cloth is now arranged round the tensioning cable and can therefore no longer blow away.

In another preferred embodiment pull wires are arranged in the formed channels. With these pull wires the tensioning cables can be pulled easily through the cloth at the location of for instance the water basin, whereafter the cloth can be arranged over the water basin.

In yet another preferred embodiment of the shadow cloth according to the invention, the total area of water-permeable zones of the first layer is greater than the total area of sun protection zones of the first layer. In such a construction the falling water can flow directly into the cloth, whereupon it can leave the cloth on the underside. This prevents water being held back unnecessarily by sun protection zones.

The invention further relates to a water basin comprising a peripheral edge which bounds the storage volume of the water basin and which defines an upward directed opening, and a shadow cloth according to the invention which extends above the opening.

The water basin can herein comprise suspension cables extending between the first and second layer of the shadow cloth from one side of the opening to an opposite side.

In a preferred embodiment the suspension cables are manufactured from a plastic. Plastics are available on the market which exhibit very little expansion as a result of heat. Depending on the prevailing temperature, the shadow cloth can hereby be stretched tautly above the water basin.

In yet another embodiment of the water basin according to the invention, the first layer of the shadow cloth is directed upward.

These and other features of the invention are further elucidated with reference to the annexed drawings.
Fig. 1 shows in perspective view an embodiment of a water basin according to the invention;
fig. 2 shows the shadow cloth of fig. 1 in more detail; and
fig. 3 shows in even more detail a layer of a shadow cloth as according to fig. 1 and 2.

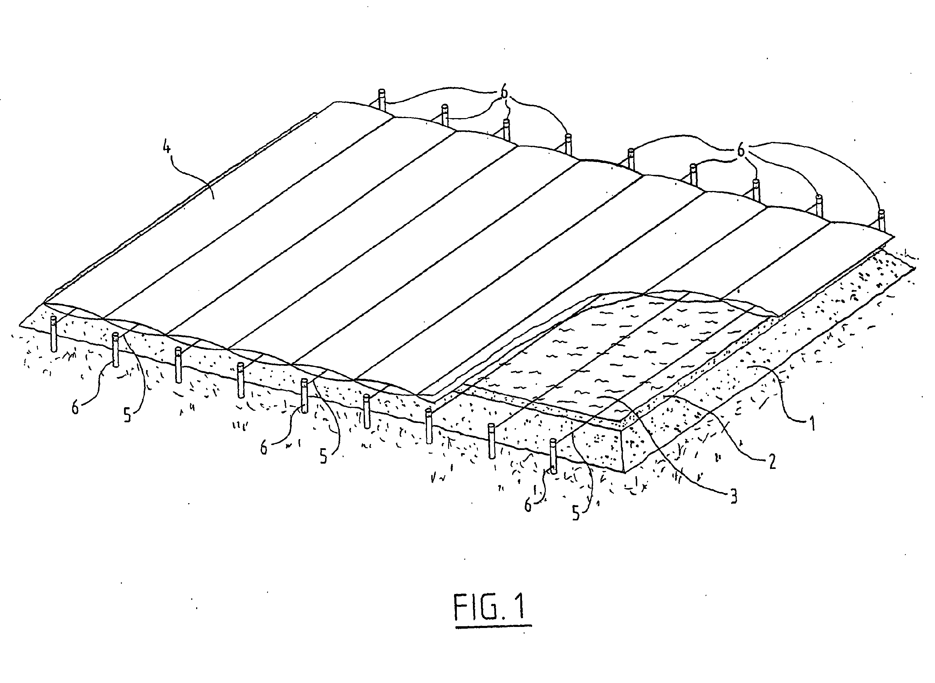

Fig. 1 shows a water basin 1. This water basin 1 has an edge 2 which defines an opening. Rainwater 3 is held in water basin 1. A shadow cloth 4 extends above the opening defined by edge 2. Through this shadow cloth 4 run cables 5 which are clamped between posts 6 on either side of water basin 1.

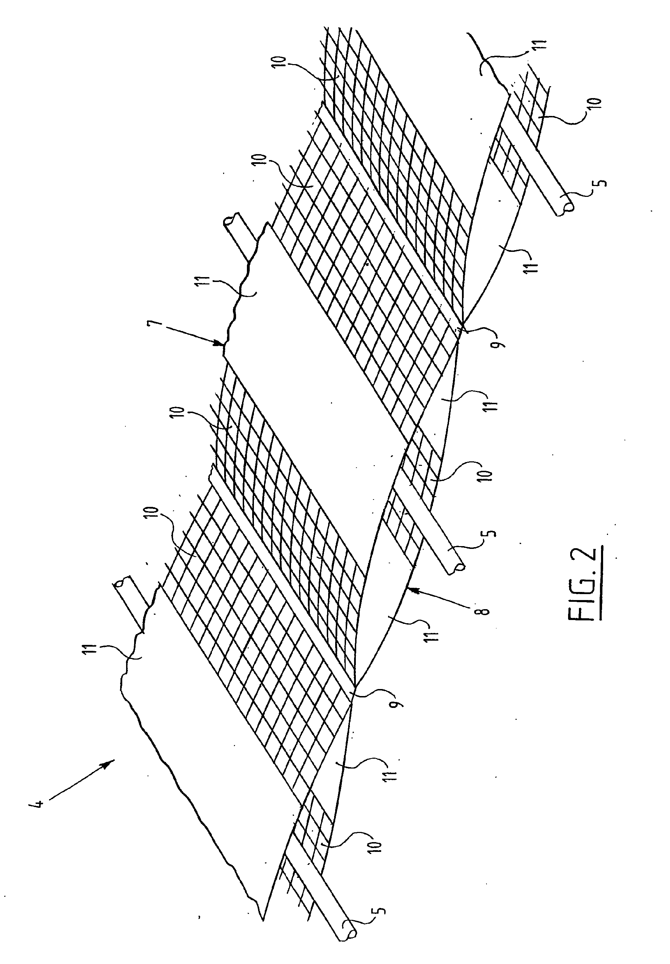

Fig. 2 shows shadow cloth 4 in more detail. Shadow cloth 4 consists of an upper layer 7 and a lower layer 8. Upper layer 7 and lower layer 8 are mutually connected at discrete positions 9. This creates channels through which cables 5 can be fed. Both upper layer 7 and lower layer 8 have water-permeable zones 10 and sun protection zones 11. As is apparent from the figure, a sun protection zone 11 is always present in the one layer at the position of a water-permeable zone 10 in the other layer. A shadow cloth 4 is thus obtained which has over its whole surface the sun protection properties of the sun protection zones 11, while still also having a good water-permeability which is obtained through the water-permeable zones 10.

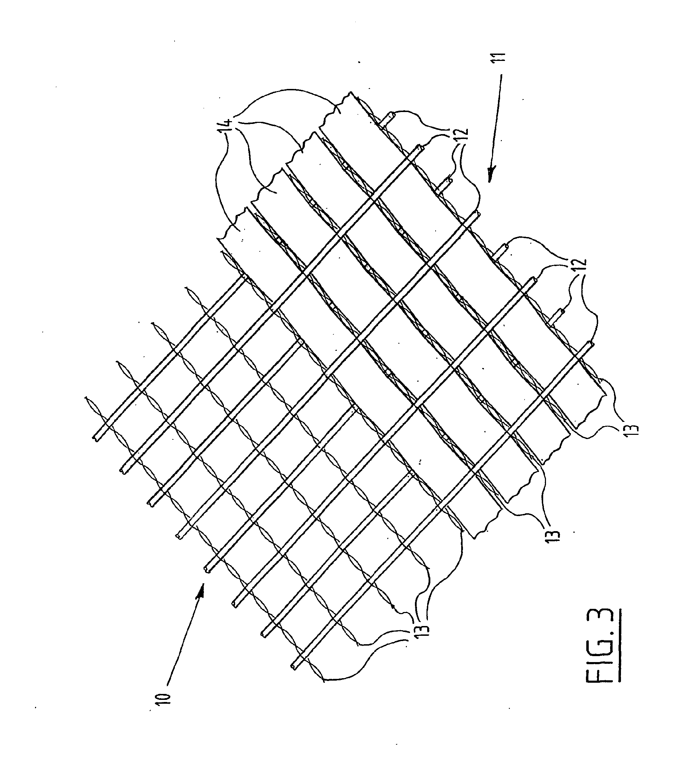

Fig. 3 shows a layer 7, 8 of shadow cloth 4 in more detail. In this embodiment the layer is a woven fabric consisting of weft threads 12 and first main warp threads 13. The main threads 13 consist of a twisted or wound thread through which the weft threads 12 run. The relative position between main threads 13 and weft threads 12 is thus determined, thereby making possible an open structure which forms the water-permeable zones 10. Arranged at the position of sun protection zones 11 are subsidiary threads 14 which provide sun protection. These subsidiary threads 14 are preferably ribbon-shaped. A high density providing the required sun protection is hereby obtained.

## Claims

1. Shadow cloth for spanning a water basin, which cloth comprises a first layer with water-permeable zones and sun protection zones and a second layer with water-permeable zones and sun protection zones, wherein the sun protection zones of the first layer are positioned at the location of the water-permeable zones of the second layer and the water-permeable zones of the first layer are positioned at the location of the sun protection zones of the second layer.

2. Shadow cloth as claimed in claim 1, wherein the cloth is a woven fabric of weft and warp threads.

3. Shadow cloth as claimed in claim 2, wherein the warp threads for at least one of the layers comprise first main threads arranged at substantially fixed distance from each other and second subsidiary threads arranged in zones between the main threads.

4. Shadow cloth as claimed in claim 3, wherein the subsidiary threads have a substantially elongate cross-section.

5. Shadow cloth as claimed in any of the foregoing claims, wherein each layer has at the position of the sun protection zones a higher density than at the position of the water-permeable zones.

6. Shadow cloth as claimed in any of the foregoing claims, wherein the first layer and second layer are connected to each other at discrete positions.

7. Shadow cloth as claimed in claim 6, wherein the first layer and second layer are connected to each other along strips running parallel to each other such that channels are formed between the first and second layer.

8. Shadow cloth as claimed in claim 7, wherein pull wires are arranged in the formed channels.

9. Shadow cloth as claimed in any of the foregoing claims, wherein the total area of water-permeable zones of the first layer is greater than the total area of sun protection zones of the first layer.

10. Water basin comprising a peripheral edge which bounds the storage volume of the water basin and which defines an upward directed opening, and a shadow cloth as claimed in any of the foregoing claims which extends above the opening.

11. Water basin as claimed in claim 10, comprising suspension cables extending between the first and second layer of the shadow cloth from one side of the opening to an opposite side.

12. Water basin as claimed in claim 11, wherein the suspension cables are manufactured from a plastic.

13. Water basin as claimed in any of the claims 10-12, wherein the first layer of the shadow cloth is directed upward.

## Patentansprüche

1. Beschattungstuch zum Überspannen eines Wasserbeckens, wobei das Tuch eine erste Schicht mit wasserdurchlässigen Zonen und Sonnenschutzzonen und eine zweite Schicht mit wasserdurchlässigen Zonen und Sonnenschutzzonen umfasst, wobei sich die Sonnenschutzzonen der ersten Schicht an der Position der wasserdurchlässigen Zonen der zweiten Schicht befinden und die wasserdurchlässigen Zonen der ersten Schicht sich an der Position der Sonnenschutzzonen der zweiten Schicht befinden.

2. Beschattungstuch gemäß Anspruch 1, wobei das Tuch ein gewebter Stoff aus Kett-und Schussfäden ist.

3. Beschattungstuch gemäß Anspruch 2, wobei die Kettfäden für mindestens eine der Schichten erste Hauptfäden umfassen, die in einem im Wesentlichen festen Abstand zueinander angeordnet sind, und zweite Nebenfäden, die in Zonen zwischen den Hauptfäden angeordnet sind.

4. Beschattungstuch gemäß Anspruch 3, wobei die Nebenfäden im Wesentlichen einen länglichen Querschnitt aufweisen.

5. Beschattungstuch gemäß einem der obigen Ansprüche, wobei jede Schicht an der Position der Sonnenschutzzonen eine höhere Dichte aufweist als an der Position der wasserdurchlässigen Zonen.

6. Beschattungstuch gemäß einem der vorhergehenden Ansprüche, wobei die erste und die zweite Schicht miteinander an diskreten Positionen verbunden sind.

7. Beschattungstuch gemäß Anspruch 6, wobei die erste und die zweite Schicht miteinander entlang parallel verlaufender Streifen dergestalt verbunden sind, dass zwischen der ersten und der zweiten Schicht Kanäle gebildet werden.

8. Beschattungstuch gemäß Anspruch 7, wobei in den gebildeten Kanälen Zugschnüre angeordnet sind.

9. Beschattungstuch gemäß einem der vorhergehenden Ansprüche, wobei die Gesamtfläche der wasserdurchlässigen Zonen der ersten Schicht größer ist als die Gesamtfläche der Sonnenschutzzonen der ersten Schicht.

10. Wasserbecken, eine Randkante umfassend, die das Speichervolumen des Wasserbeckens begrenzt und die eine noch oben ausgerichtete Öffnung definiert, und ein Beschattungstuch gemäß einem der obigen Ansprüche, das sich über die Öffnung erstreckt.

11. Wasserbecken gemäß Anspruch 10, das Spannseile umfasst, die sich zwischen der ersten und zweiten Schicht des Beschattungstuches von einer Seite der Öffnung zu einer gegenüberliegenden Seite erstrecken.

12. Wasserbecken gemäß Anspruch 11, wobei die Spannseile aus Plastik gefertigt sind.

13. Wasserbecken gemäß einem der Ansprüche 10-12, wobei die erste Schicht des Beschattungstuches nach oben gerichtet ist.

## Revendications

1. Toile à ombrager destinée à recouvrir un bassin aquatique, laquelle toile comprend une première couche ayant des zones perméables à l'eau et des zones de protection solaire et une seconde couche ayant des zones perméables à l'eau et des zones de protection solaire, dans laquelle les zones de protection solaire de la première couche sont positionnées au niveau de l'emplacement des zones perméables à l'eau de la seconde couche et les zones perméables à l'eau de la première couche sont positionnées au niveau de l'emplacement des zones de protection solaire de la seconde couche.

2. Toile à ombrager selon la revendication 1, dans laquelle la toile est un tissu croisé de fils de trames et de fils de chaînes.

3. Toile à ombrager selon la revendication 2, dans laquelle les fils de chaîne pour au moins l'une des couches comprennent des premiers fils principaux agencés à une distance sensiblement fixe les uns des autres et des seconds fils auxiliaires agencés dans des zones situées entre les fils principaux.

4. Toile à ombrager selon la revendication 3, dans laquelle les fils auxiliaires ont une coupe transversale sensiblement allongée.

5. Toile à ombrager selon l'une quelconque des revendications précédentes, dans laquelle chaque couche présente une densité plus élevée au niveau des zones de protection solaire qu'au niveau des zones perméables à l'eau.

6. Toile à ombrager selon l'une quelconque des revendications précédentes, dans laquelle la première couche et la seconde couche sont raccordées l'une à l'autre à des positions distinctes.

7. Toile à ombrager selon la revendication 6, dans laquelle la première couche et la seconde couche sont raccordées l'une à l'autre le long de bandes s'étendant parallèlement les unes par rapport aux autres de telle sorte que des canaux se forment entre la première et la seconde couche.

8. Toile à ombrager selon la revendication 7, dans laquelle des fils de traction sont agencés dans les canaux formés.

9. Toile à ombrager selon l'une quelconque des revendications précédentes, dans laquelle la surface totale des zones perméables à l'eau de la première couche est plus grande que la surface totale des zones de protection solaire de la première couche.

10. Bassin aquatique comprenant un bord périphérique qui limite le volume de stockage du bassin aquatique et qui définit une ouverture dirigée vers le haut, et toile à ombrager selon l'une quelconque des revendications précédentes qui s'étend au-dessus de l'ouverture.

11. Bassin aquatique selon la revendication 10, comprenant des câbles de suspension s'étendant entre la première et la seconde couche de la toile à ombrager à partir d'un côté de l'ouverture jusqu'à un côté opposé.

12. Bassin aquatique selon la revendication 11, dans lequel les câbles de suspension sont fabriqués à partir d'un plastique.

13. Bassin aquatique selon l'une quelconque des revendications 10 à 12, dans lequel la première couche de la toile à ombrager est dirigée vers le haut.
